(19) Europäisches Patentamt
European Patent Office
Office européen des brevets

(11) **EP 1 154 585 B1**

(12) **EUROPEAN PATENT SPECIFICATION**

(45) Date of publication and mention
of the grant of the patent:
**27.02.2008 Bulletin 2008/09**

(51) Int Cl.:
***H04B 1/707*** *(2006.01)*

(21) Application number: **00110027.0**

(22) Date of filing: **12.05.2000**

(54) **Receiver for a communication device for a multi-path radio channel**

Empfänger für eine Kommunikationseinrichtung für einen Mehrwegfunkkanal

Récepteur pour un dispositif de communication pour un canal radio à multi-voies

(84) Designated Contracting States:
**DE DK FR GB IT SE**

(43) Date of publication of application:
**14.11.2001 Bulletin 2001/46**

(73) Proprietor: **IPCom GmbH & Co. KG**
**82049 Pullach (DE)**

(72) Inventor: **Vejlgaard, Benny**
**9260 Gistrup (DK)**

(74) Representative: **Gigerich, Jan et al**
**Frohwitter**
**Patent- und Rechtsanwälte**
**Postfach 86 03 68**
**81630 München (DE)**

(56) References cited:
**WO-A-96/10873**      **US-A- 5 280 472**

## Description

The present invention relates to a receiver, in particular a Code Division Multiple Access (CDMA) receiver, for a, in particular mobile, communication device.

A (mobile) communication device in particular a mobile communication device having a Code Division Multiple Access (CDMA) receiver, may be allocated to a base station. When the mobile communication device is allocated to the base station, the mobile communication device will, due to reflections, receive multi-path components of a signal sent by the base station. A known receiver for receiving multi-path signals from a base station comprises a correlator for correlating the identification signal of the base station with locally generated signals and an hypothesis algorithm judging whether the time delay of the locally generated signal matches the delay time of a multi-path component in the received identification signal. A receiver of higher performance may be found in Viterbi, Andrew, "Principles of Spread Spectrum Communications", Addison-Wesley Publishing Company 1995, disclosing a multiple dual series search acquisition scheme. Such a multiple dual series search acquisition scheme comprises both a correlator for correlating an identification signal received from the base station and an additional hypothesis testing.

A known receiver architecture for CDMA mobile systems is the rake receiver. See Price, R. et al., "A Communication Technique for Multipath Channels," Proceedings of the IRE, 1958, vol. 46, pp. 555-570. A rake receiver consists of a bank of correlation-type receivers or correlators. Each correlator of the bank of correlators is used to detect a separate multi-path component.

A further acquisition scheme is disclosed in Gweon-Do Jo, Sook-Heyn Chang, Hye-Yeon Kweon, and Sun-Young Kim. Performance Evaluation of Pilot Channel Acquisition System in CDMA Forward Link, IEEE 48th Vehicular Technology Conference, 1998, Vol. 2, pp. 1244-1248, however it turned out that this acquisition scheme fails if multi-path components of a signal are present.

A further multiple path acquisition scheme is known from Easton K. et al., WO96/10873, MULTIPATH SEARCH PROCESSOR FOR A SPREAD SPECTRUM MULTIPLE ACCESS COMMUNICATION SYSTEM, which discloses an integrated search processor used in a modem for a spread spectrum communications, using system buffers which receive samples and utilizes a time sliced transform processor operating on successive offsets from the buffer. The search processor calculates the correlation energy at each offset, and presents a summary report of the best paths found in the search to use for demodulation element reassignment.

It is an object of the present invention to improve a receiver, in particular a CDMA receiver, for a, in particular mobile, communication device.

The object is achieved by the receiver arrangement according to claim 1 or a communication device according to claim 9.

Such a receiver arrangement or mobile communication device comprises

- a signal generator for generating at least m locally generated signals, which are time delayed by a delay time from each other,
- a correlator for obtaining m correlated signals by correlating a received identification signal with the m locally generated signals, and
- a ranking arrangement for identifying j correlated signals of highest power out of the m correlated signals and
- a selecting arrangement selecting n correlated signals out of the j correlated signals, where n is less or equal j.

The object of the present invention is further achieved by a method for operating a receiver arrangement by receiving an identification signal and obtaining m correlated signals by
correlating the identification signal with m locally generated signals, which are time delayed from each other,
and identifying j correlated signals of highest power out of the m correlated signals.

The object of the present invention is further achieved by a method for operating a receiver arrangement, by

- receiving an information signal and an identification signal,
- obtaining m correlated signals by correlating the identification signal with m locally generated signals, which are time delayed from each other,
- identifying j correlated signals of highest power out of the m locally generated signals,
- selecting n correlated signals out of the j correlated signals, wherein n is less than or equal j,
- obtaining n or less delayed information signals by delaying the information signal by time delays which correspond to the n selected correlated signals, and
- adding the n or less delayed information signals or adding the n or less delayed information signals and the information signal.

In a preferred embodiment of the invention the receiver arrangement is a Code Division Multiple Access, CDMA, receiver, in particular a rake receiver.

In a further preferred embodiment of the invention the delay time is less than 20μs.

In a further preferred embodiment of the invention m is less than 100, in particular about 80.

In a further preferred embodiment of the invention j is grater than 5 and less than m/2, in particular less than 30.

In a further preferred embodiment of the invention j is less than 20.

In a further preferred embodiment of the invention the receiver arrangement comprises an evaluation arrangement for selecting n correlated signals out of the j correlated signals of highest power, wherein n is less than or equal j.

In a further preferred embodiment of the invention the receiver arrangement, which is capable of receiving an information signal, comprises a delay arrangement for obtaining n or less delayed information signals by delaying the information signal by delay times which correspond to the n selected correlated signals.

In a further preferred embodiment of the invention the receiver arrangement comprises a summation arrangement for adding the n or less delayed information signals or adding the n or less delayed information signals and the information signal.

The communication device is preferably a mobile communication device, in particular a mobile phone or mobile computer. However the communication device may also be part of a wireless building communications system.

Further advantages of the present invention will become apparent from the claims and the description below, based on the drawings, in which:

FIG. 1    shows a mobile communication device,
FIG. 2    shows a receiver arrangement,
FIG. 3    discloses the multi-path identification arrangement,
FIG. 4    shows a correlator,
FIG. 5    discloses the ranking arrangement,
FIG. 6    shows an embodiment of a ranking filter in terms of a flow chart,
FIG. 7    shows a part of the flow chart of FIG. 6, and
FIG. 8    shows a descrambling arrangement

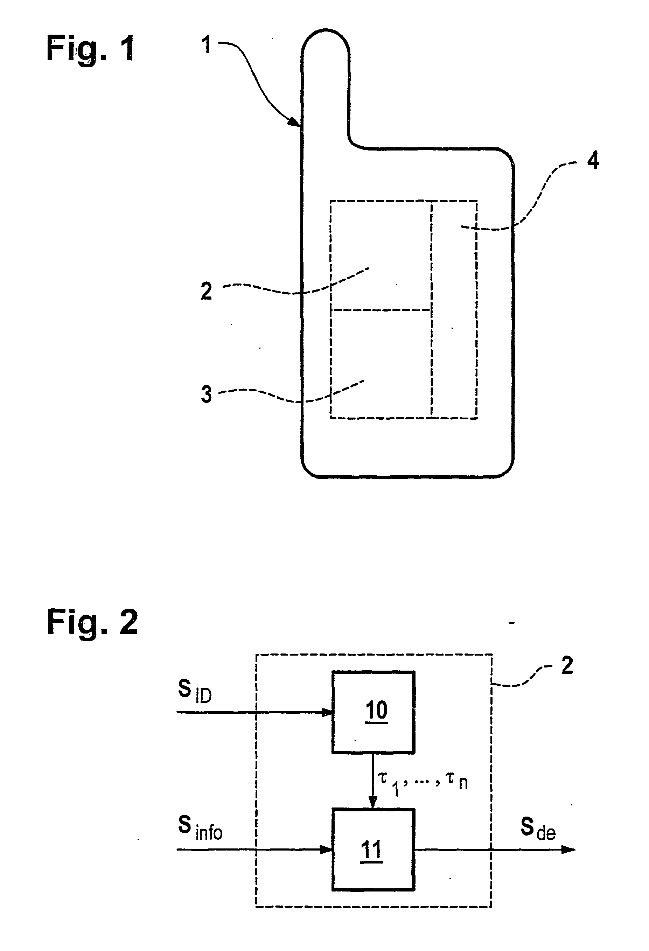

FIG. 1 shows a mobile communication device 1. The mobile communication device 1 is in the present embodiment a mobile phone for a European Telecommunications Standard Institute system or Universal Mobile Telecommunications system, an Association of radio Industries and Businesses Wideband Code Division Multiple Access communications system, and/or a Wideband Code Division Multiple Access system being defined by 3$^{rd}$ Generation Partnership Project communications system.

The mobile communication device 1 may be a multi-mode mobile station, capable of operating, for example in a Global System for Mobile Telecommunications (GSM) system as well as a UMTS system.

The mobile communication device 1 comprises the receiver arrangement 2 and processing means 3. The receiver arrangement 2 receives signals from a base station (not shown). The processing means 3, among many other tasks, proces signals received from the receiver arrangement 2. The mobile communication device 1 may further comprise additional circuitry, filter means, processing means, storage means, man machine interfaces and so on which are denoted by reference number 4.

FIG. 2 shows the receiver arrangement 2 in more detail. The receiver arrangement 2 comprises a multi-path identification arrangement 10 which determines time delays $\tau_1$, ....., $\tau_n$ based upon an identification signal $S_{ID}$ received from the base station. Due to reflections and different travels of the signal sent by the base station the identification signal $S_{ID}$ comprises time delayed versions of the signal originally sent from the base station.

The receiver arrangement 2 further comprises a descrambling arrangement descrambling an information signal $S_{info}$ originating from the base station based upon the time delays $\tau_1$, .... ,$\tau_n$ provided by the multi-path identification arrangement. The output of the descrambling arrangement 11 is a signal $S_{de}$ which is further processed by the processor means 3. The information signal $S_{info}$ carries user information such as speech, email or internet information.

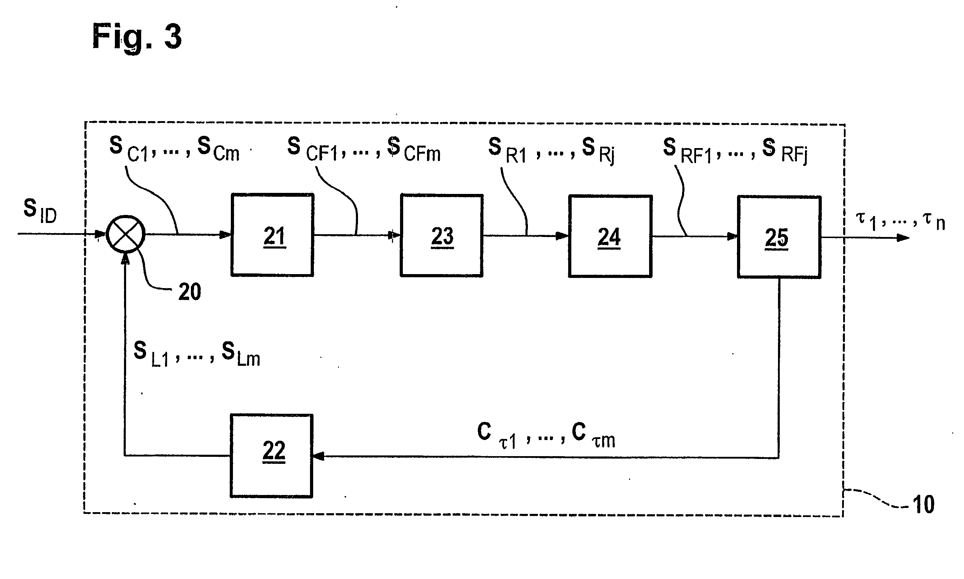

FIG. 3 discloses the multi-path identification arrangement 10 in more detail. The multi-path identification arrangement comprises a signal generator 22 for generating locally generated signals $S_{L1}$, .....,$S_{Lm}$ having essentially the same information content as the identification signal $S_{ID}$ of the base station. The locally generated signals $S_{L1}$, ...., $S_{Lm}$ are timed delayed from each other by a delay between 100ns and 300ns. In the current embodiment the delay is 130ns. m is preferably less than 100. Preferably it is about 80. In the current embodiment m is 77. The largest absolute delay time of a locally generated signal $S_{L1}$, ....,$S_{Lm}$ is preferably between 10 $\mu$s and 20 $\mu$s.

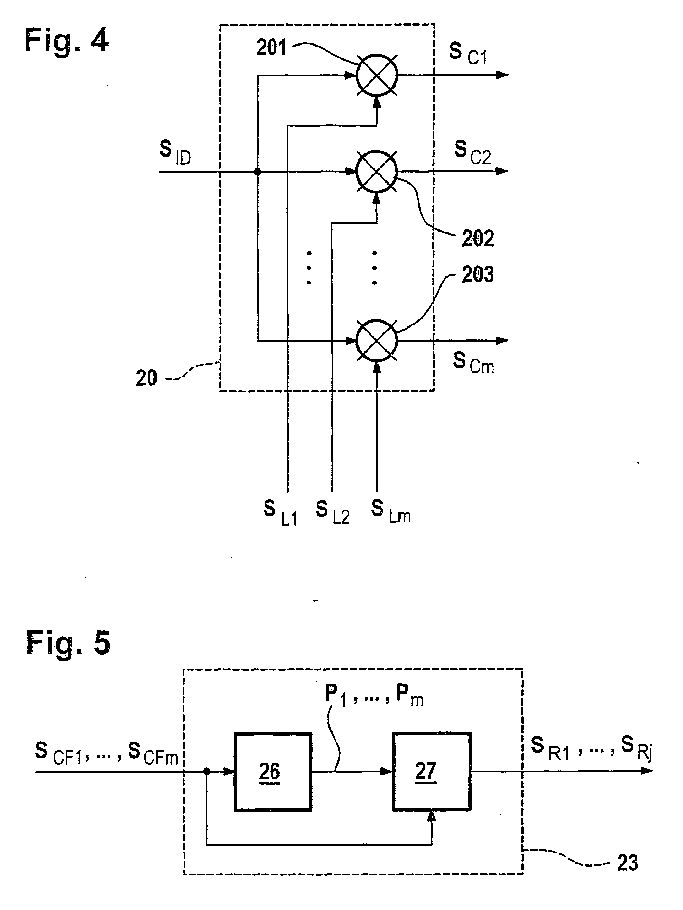

The multi-path identification arrangement further comprises a correlator 20 for correlating the identification signal $S_{ID}$ with the locally generated signals $S_{L1}$, ...., $S_{Lm.}$ The correlation can be carried out serial or in parallel or in a combination of both methods. All three possibilities are within the scopes of the claims. If the correlation is carried out in parallel correlator 20 comprises m subcorrelators 201, 202 and 203 as indicated in FIG. 4. The outputs of the correlator 20 are correlated signals $S_{C1}$,.... $S_{Cm}$. They are inputs to a first filter 21 removing noise from the signals. The output signals of the filter are denoted with $S_{CF1}$, .... $S_{CFm}$. These signals are fed into a ranking arrangement 23 which is shown in more detail in FIG. 5. The ranking arrangement 23 identifies the j signals $S_{R1}$, ...., $S_{Rj}$ of highest power out of the m correlated signals $S_{CF1}$, .... , $S_{CFm}$. The signals of highest power $S_{R1}$, .... , $S_{Rj}$ are outputs of the ranking arrangement 23 and inputs to a second filter 24. The second filter 24 is preferably a more complex filter than the first filter 21. The output signals $S_{RF1}$, ..., $S_{RFj}$ of the second filter 24 are fed into an evaluation arrangement 25. The evaluation arrangement 25 determines the delay times $\tau_1$...., $\tau_n$. This is most preferably done via a hypothesis testing algorithm which tests the hypothesis that a delay time $\tau_i$ matches a delay time of a signal component in the identification signal $S_{ID}$. The hypothesis test is preferably a likelihood ratio test which is for example disclosed in K. Sam Shanmugan and A.M. Breipohl Random signals, the detection estimation and data analysis" John Wiley and Sons, 1988.

The evaluation arrangement 25 also generates control parameters $C_{\tau 1}$, ...., $C_{\tau n}$ for controlling the signal generator 22.

FIG. 5 discloses the ranking arrangement 23 in more detail. The ranking arrangement 23 comprises a power detector 26 detecting the power $P_1$, ...., $P_m$ of the signals $S_{CF1}$, ..... , $S_{CFm}$. The values for $P_1$, .... , $P_m$ as well as the signals $S_{CF1}$, ..... , $S_{CFm}$ are fed into a ranking filter 27. The ranking filter 27 determines j signals $S_{R1}$,....., $S_{Rj}$ of highest power out of the signals $S_{CF1}$, ...., $S_{CFm}$.

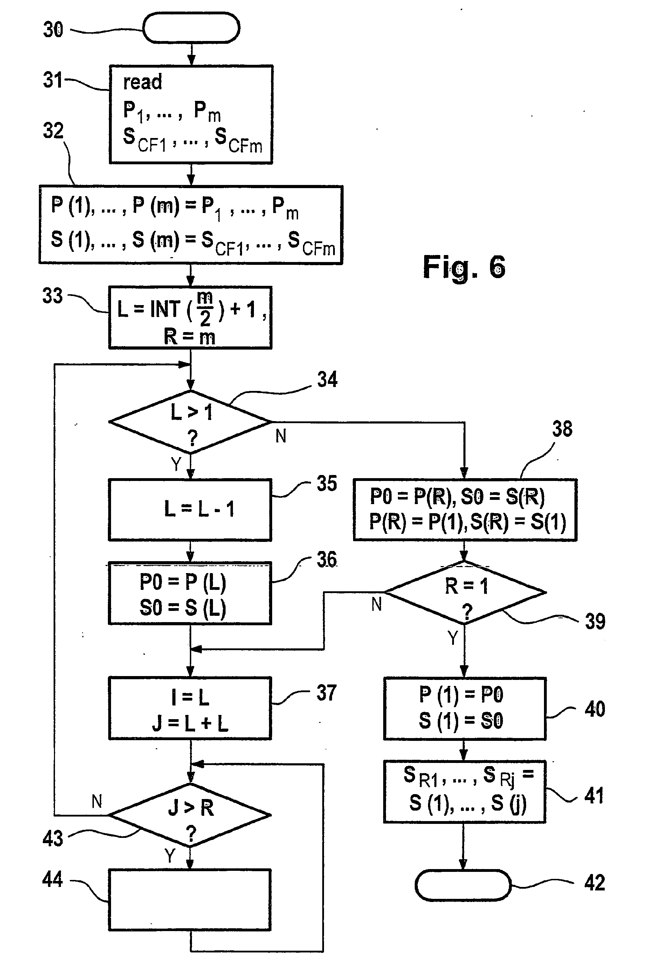

A preferred embodiment of the ranking filter 27 is shown in FIG. 6 in terms of a flow chart. After the start the 30 a step 31 is carried out reading the values of $P_1$,....., $P_m$ and the signals $S_{CF1}$, .... , $S_{CFm}$. Step 31 is followed by a step 32, assigning
$P(1)$, ..., $P(m)$ = $P_1$, ...., $P_m$
and
$S(1)$, ..., $S(m)$ = $S_{CF1}$, ....., $S_{CFm}$
i.e., a variable $P(1)$ is assigned to have a value $P_1$, a variable $P(2)$ is assigned to have a value $P_2$, etc. and a signal $S(1)$ to be $S_{CF1}$, a signal $S(2)$ to be $S_{CF2}$, etc.

Step 32 is followed by a step 33 defining variables L and R as

$$L \;=\; INT\;(m/2)+\;1$$

and
R=m
where INT is a function rounding down to the closest integer.

Step 33 is followed by a decision block 34 checking whether L is greater that 1. If this condition is fulfilled decision block 34 is followed by a step 35 decreasing L by 1, i.e.:

$$L \;=\; L-1$$

Step 35 is followed a step 36 assigning the following:

PO = P(L)
SO = S (L)

Step 36 is followed by step 37 with
I=L

$$J=L+L$$

If L is not greater than 1 decision block 34 is followed by a step 38 assigning:

PO= P(R)
SO= S(R)
P(R)= P(1)
S(R)= S(1)

Step 38 is followed by decision block 39 checking whether R is equal to 1. If this condition is not fulfilled decision block 39 is followed by a step 37.

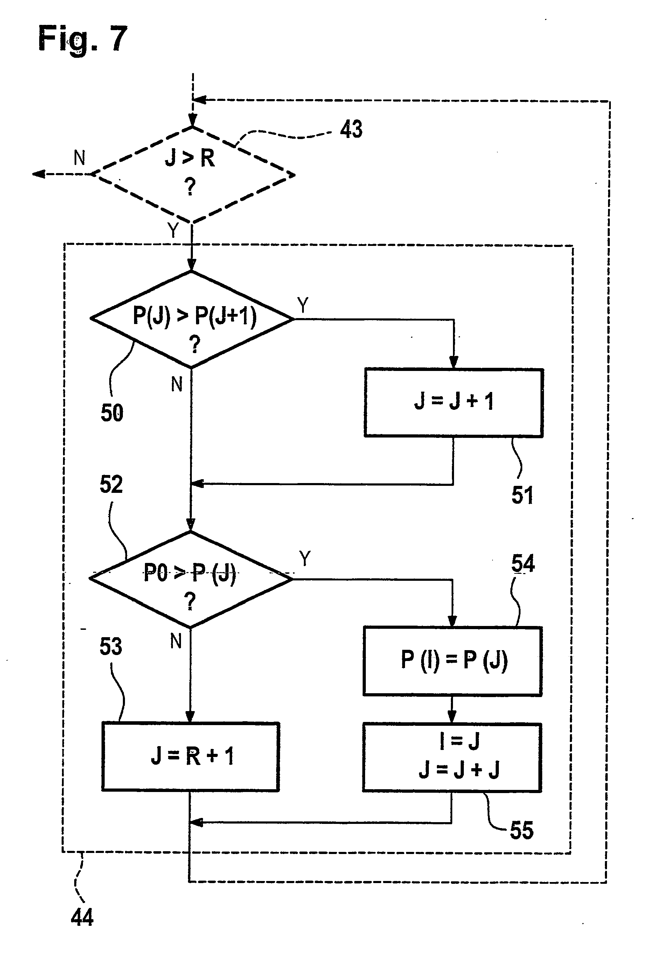

Step 37 is followed by decision block 43 checking whether J is greater than R. If this decision is not fulfilled decision block 43 is followed by decision block 34. If however this decision is fulfilled, decision block 43 is followed by a step 44. Step 44 is shown in more detail in FIG. 7. Step 44 is followed by decision block 43.

If R equals 1 decision block 39 is followed by a step 40 assigning:

P(1) = PO
S(1) = SO

Step 40 followed by a step 41 assigning
$S_{R1}$,....., $S_{Rj}$ = S(1),..., S(j)
and outputting $S_{R1}$, ...., $S_{Rj}$.

After 41 is carried out the program is terminated as indicated with reference number 42.

FIG. 7 shows step 44 in more detail. Decision block 43 is followed by a decision block checking whether P(J) P(J+1)
If

$$P\;(J)\;>\;P(J+1)$$

decision block 50 is followed by a step 51 incrementing J:

$$J \;=\; J+1$$

Step 51 is followed by a decision block 52.

If, however, the condition

$$P(J)\;>\;P(J+1).$$

is not met, decision block 50 is followed by decision block 52 checking whether

$$PO\;>\;P(J)$$

If this condition is met, decision block 52 is followed by a step 54 with

$$P(I) = P(J)$$

Step 54 is followed by a step 55 with:
I = J
and

$$J = J+J$$

Step 55 is followed by decision block 43.
If the condition

$$PO > P(J)$$

is not met, decision block 52 is followed by a step 53 with:

$$J = R+1$$

Step 53 is followed by a decision block 43.

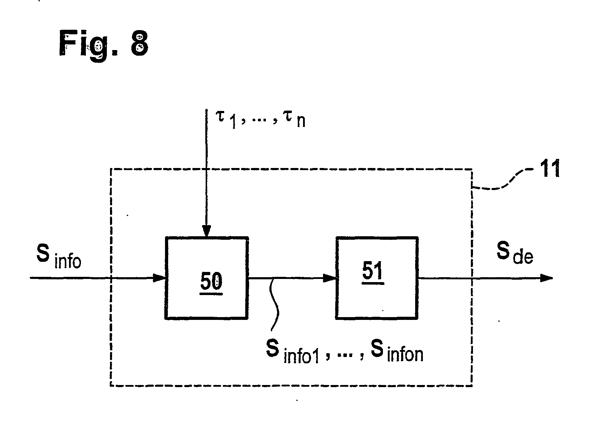

FIG. 8 shows the descrambling arrangement 11 in more detail. The descrambling arrangement 8 comprises a delay arrangement 50 delaying the information signal $S_{info}$ by the delay times $\tau_1$, ...., $\tau_n$ to obtain delayed information signals $S_{info1}$,..., $S_{infon}$ of the information signal $S_{info}$ respectively. The delayed information signals $S_{info1}$, ....., $S_{infon}$ are added by a summation arrangement 51. The output of the summation point 31 is signal $S_{de}$ which is the sum of $S_{info1}$,..., $S_{infon}$.
In all the embodiments of the present invention described herein, as well as other embodiments of the present invention, the method or communication device may be used in an European Telecommunications Standard Institute (ETSI) or Universal Mobile Telecommunications System (UMTS), an Association of Radio Industries and Businesses (ARIB) Wideband Code Division Multiple Access (WCDMA) system, or a Wideband Code Division Multiple Access (WCDMA) system being defined by 3rd Generation Partnership Project (3GPP) system.
Various embodiments within the scope of the present invention are possible. For example, the present invention may be applied to various frequency bands. Additionally, the present invention may be applied for monitoring in other types of mobile communication systems than those described herein.

## Claims

1. Receiver arrangement (2), in particular for a mobile communication device (1), comprising a signal generator (22) for generating at least m locally generated signals ($S_{L1}$, ....., $S_{Lm}$), which are time delayed by a delay time from each other, and a correlator for obtaining m correlated signals ($S_{C1}$, ...., $S_{Cm}$) by correlating a received identification signal with the m locally generated signals ($S_{L1}$, ....., $S_{Lm}$),
   **characterized in that**
   the receiver arrangement (2) comprises a ranking arrangement (23) for identifying j correlated signals ($S_{R1}$, ...., $S_{Rj}$) of highest power out of the m correlated signals ($S_{C1}$, ...., $S_{Cm}$) and an evaluation arrangement (25) for selecting n correlated signals of the i correlated signals ($S_{R1}$, ...., $S_{Rj}$) of highest power, wherein n is less than or equal j.

2. Receiver arrangement (2) according to claim 1,
   **characterized in that**
   the receiver arrangement (2) is a Code Division Multiple Access, CDMA, receiver, in particular a rake receiver.

3. Receiver arrangement (2) according to claim 1 or 2,
   **characterized in that**
   the delay time is less than 20 $\mu$s.

4. Receiver arrangement (2) according to claim 1, 2, or 3, **characterized in that** m is less than 100, in particular about 80.

5. Receiver arrangement (2) according to claim 1, 2, 3 or 4, **characterized in that** j is grater than 5 and less than m/2, in particular less than 30.

6. Receiver arrangement (2) according to claim 1, 2, 3, 4 or 5, **characterized in that** j is less than 20.

7. Receiver arrangement (2) according to claim 1, wherein the receiver arrangement (2) is capable of receiving an information signal,
   **characterized in that**
   the receiver arrangement (2) comprises a delay arrangement for obtaining n or less delayed information signals by delaying the information signal by delay times which correspond to the n selected correlated signals.

8. Receiver arrangement (2) according to claim 7,
   **characterized in that**
   the receiver arrangement (2) comprises a summation arrangement for adding the n or less delayed information signals or adding the n or less delayed information signals and the information signal.

9. Communication device, in particular comprising a receiver arrangement (2) according to one of the foregoing claims, having a signal generator (22) for generating at least m locally generated signals ($S_{L1}$, ....., $S_{Lm}$), which are time delayed by a delay time from each other, and a correlator for obtaining m correlated signals ($S_{C1}$, ...., $S_{Cm}$) by correlating a received identification signal with the m locally generated signals ($S_{L1}$, ....., $S_{Lm}$),
**characterized in that**
the receiver comprises a ranking arrangement (23) for
identifying j correlated signals ($S_{R1}$, ...., $S_{Rj}$) of highest power out of the m correlated signals ($S_{C1}$, ...., $S_{Cm}$) and an evaluation arrangement (25) for selecting n correlated signals of the j correlated signals ($S_{R1}$,... $S_{Rj}$) of highest power, wherein n is less than or equal j.

10. Communication device according to claim 9,
**characterized in that**
the communication device is a mobile communication device (1).

11. Communication device according to claim 10,
**characterized in that**
the communication device is a mobile phone or mobile computer.

12. Method for operating a receiver arrangement (2), in particular for operating a receiver arrangement (2) according to one of the claims 1 through 8, by receiving an identification signal and obtaining m correlated signals ($S_{C1}$, ...., $S_{Cm}$) by correlating the identification signal with m locally generated signals ($S_{L1}$, ....., SLm), which are time delayed from each other,
**characterized in that** j correlated signals ($S_{R1}$, ...., $S_{Rj}$) of highest power out of the m correlated signals ($S_{C1}$, ...., $S_{Cm}$) are identified and n correlated signals of the j correlated signals ($S_{R1}$, ...., $S_{Rj}$) of highest power are selected, wherein n is less than or equal j.

13. Method according to claim 12 for operating a receiver arrangement (2) according to one of the claims 1
**characterized in**
receiving an information signal
obtaining n or less delayed information signals by delaying the information signal by time delays which correspond to the n selected correlated signals, and adding the n or less delayed information signals or adding the n or less delayed information signals and the information signal.

**Patentansprüche**

1. Empfängeranordnung (2), insbesondere für eine mobile Kommunikationsvorrichtung (1), umfassend einen Signalgenerator (22) zum Erzeugen von mindestens m lokal erzeugten Signalen ($S_{L1}$, ... , $S_{Lm}$), die um eine Zeitverzögerung gegeneinander zeitverzögert sind, und einen Korrelator zum Erhalten von m korrelierten Signalen ($S_{C1}$, ... , $S_{Cm}$) durch Korrelieren eines empfangenen Identifikationssignals mit den m lokal erzeugten Signalen ($S_{L1}$, ..., $S_{Lm}$),
**dadurch gekennzeichnet, dass**
die Empfängeranordnung (2) eine Rangordnungsanordnung (23) zum Identifizieren von j korrelierten Signalen ($S_{R1}$, ..., $S_{Rj}$) höchster Leistung aus den m korrelierten Signalen ($S_{C1}$, ..., $S_{Cm}$) und eine Auswertungsanordnung (25) zum Auswählen von n korrelierten Signalen aus den j korrelierten Signalen ($S_{R1}$, ... , $S_{Rj}$) höchster Leistung umfasst, wobei n kleiner oder gleich j ist.

2. Empfängeranordnung (2) nach Anspruch 1,
**dadurch gekennzeichnet, dass**
die Empfängeranordnung (2) ein CDMA-Empfänger (Code Division Multiple Access - Empfänger) insbesondere ein Rake-Empfänger ist.

3. Empfängeranordnung (2) nach Anspruch 1 oder 2,
**dadurch gekennzeichnet, dass**
die Verzögerungszeit kürzer als 20 $\mu$s ist.

4. Empfängeranordnung (2) nach Anspruch 1, 2 oder 3, **dadurch gekennzeichnet, dass** m kleiner als 100, insbesondere ungefähr 80 ist.

5. Empfängeranordnung (2) nach Anspruch 1, 2, 3 oder 4, **dadurch gekennzeichnet, dass** j größer als 5 und kleiner als m/2, insbesondere kleiner als 30 ist.

6. Empfängeranordnung (2) nach Anspruch 1, 2, 3, 4 oder 5, **dadurch gekennzeichnet, dass** j kleiner als 20 ist.

7. Empfängeranordnung (2) nach Anspruch 1, wobei die
Empfängeranordnung (2) zum Empfangen eines Informationssignals fähig ist,
**dadurch gekennzeichnet, dass**
die Empfängeranordnung (2) eine Verzögerungsanordnung zum Erhalten von n oder weniger verzögerten Informationssignalen durch Verzögern des Informationssignals um Verzögerungszeiten, die den n ausgewählten korrelierten Signalen entsprechen, aufweist.

8. Empfängeranordnung (2) nach Anspruch 7,
**dadurch gekennzeichnet, dass**
die Empfängeranordnung (2) eine Summierungsanordnung zum Addieren der n oder weniger verzögerten Informationssignale oder Addieren der n oder weniger verzögerten Informationssignale und des Informationssignals aufweist.

9. Kommunikationsvorrichtung, insbesondere umfassend eine Empfängeranordnung (2) nach einem der vorhergehenden Ansprüche, mit einem Signalgenerator (22) zum Erzeugen von mindestens m lokal erzeugten Signalen ($S_{L1}$, ... , $S_{Lm}$), die um eine Zeitverzögerung gegeneinander zeitverzögert sind, und einem Korrelator zum Erhalten von m korrelierten Signalen ($S_{C1}$, ... , $S_{Cm}$) durch Korrelieren eines empfangenen Identifikationssignals mit den m lokal erzeugten Signalen ($S_{L1}$, ... , $S_{Lm}$),
**dadurch gekennzeichnet, dass**
der Empfänger eine Rangordnungsanordnung (23) zum Identifizieren von j korrelierten Signalen ($S_{R1}$, ... , $S_{Rj}$) höchster Leistung aus den m korrelierten Signalen ($S_{C1}$, ... , $S_{Cm}$) und eine Auswertungsanordnung (25) zum Auswählen von n korrelierten Signalen aus den j korrelierten Signalen ($S_{R1}$, ...., $S_{Rj}$) höchster Leistung umfasst, wobei n kleiner oder gleich j ist.

10. Kommunikationsvorrichtung nach Anspruch 9,
**dadurch gekennzeichnet, dass**
die Kommunikationsvorrichtung eine mobile Kommunikationsvorrichtung (1) ist.

11. Kommunikationsvorrichtung nach Anspruch 10,
**dadurch gekennzeichnet, dass**
die Kommunikationsvorrichtung ein Mobiltelefon oder ein mobiler Computer ist.

12. Verfahren zum Betreiben einer Empfängeranordnung (2), insbesondere zum Betreiben einer Empfängeranordnung (2) nach einem der Ansprüche 1 bis 8, durch Empfangen eines Identifikationssignals und Erhalten von m korrelierten Signalen ($S_{C1}$, ... , $S_{Cm}$) durch Korrelieren des Identifikationssignals mit m lokal erzeugten Signalen ($S_{L1}$, ... , $S_{Lm}$), die gegeneinander zeitverzögert sind,
**dadurch gekennzeichnet, dass**
j korrelierte Signale ($S_{R1}$, ... , $S_{Rj}$) höchster Leistung aus den m korrelierten Signalen ($S_{C1}$, ... , $S_{Cm}$) identifiziert werden und n korrelierte Signale aus den j korrelierten Signalen ($S_{R1}$, ... , $S_{Rj}$) höchster Leistung ausgewählt werden, wobei n kleiner oder gleich j ist.

13. Verfahren nach Anspruch 12,
**gekennzeichnet durch**
Empfangen eines Informationssignals,
Erhalten von n oder weniger verzögerten Informationssignalen **durch** Verzögern des Informationssignals um Zeitverzögerungen, die den n ausgewählten korrelierten Signalen entsprechen, und
Addieren der n oder weniger verzögerten Informationssignale oder
Addieren der n oder weniger verzögerten Informationssignale und des Informationssignals.

**Revendications**

1. Appareil récepteur (2), en particulier pour un dispositif de communication mobile (1), comprenant un générateur de signaux (22) destiné à générer au moins $\underline{m}$ signaux générés localement ($S_{L1}$,...,$S_{Lm}$) qui sont retardés d'un certain retard de temps les uns par rapport aux autres, et un corrélateur destiné à obtenir $\underline{m}$ signaux corrélés ($S_{C1}$ ;...,$S_{Cm}$) en corrélant un signal d'identification reçu avec les $\underline{m}$ signaux générés localement ($S_{L1}$,...,$S_{Lm}$),
**caractérisé en ce que**
l'appareil récepteur (2) comprend un dispositif de classement (23) pour identifier $\underline{j}$ signaux corrélés ($S_{R1}$,...,$S_{Rj}$) de puissance la plus élevée parmi les $\underline{m}$ signaux corrélés ($S_{C1}$,...,$S_{Cm}$), et un dispositif d'évaluation (25) pour sélectionner $\underline{n}$ signaux corrélés des $\underline{j}$ signaux corrélés ($S_{R1}$,....,$S_{Rj}$) de puissance la plus élevée, $\underline{n}$ étant inférieur ou égal à j.

2. Appareil récepteur (2) selon la revendication 1,
**caractérisé en ce que**
l'appareil récepteur (2) est un récepteur à Accès Multiple à Répartition en Code (AMRC), en particulier un récepteur à classement.

3. Appareil récepteur (2) selon l'une des revendications 1 ou 2,
**caractérisé en ce que**
le temps de retard est inférieur à 20 μs.

4. Appareil récepteur (2) selon l'une des revendications 1, 2 ou 3,
**caractérisé en ce que**
m est inférieur à 100 et en particulier de l'ordre de 80.

5. Appareil récepteur (2) selon l'une des revendications 1, 2, 3 ou 4,
**caractérisé en ce que**
j est supérieur à 5 et inférieur à m/2, en particulier inférieur à 30.

6. Appareil récepteur (2) selon l'une des revendications 1, 2, 3, 4 ou 5,
**caractérisé en ce que**
j est inférieur à 20.

7. Appareil récepteur (2) selon la revendication 1, capable de recevoir un signal d'information,
**caractérisé en ce que**
l'appareil récepteur (2) comprend un dispositif de retard permettant d'obtenir $\underline{n}$ ou un moins grand nombre de signaux d'information retardés, en retardant le signal d'information par des temps de retard qui correspondent aux $\underline{n}$ signaux corrélés sélectionnés.

8. Appareil récepteur (2) selon la revendication 7,
**caractérisé en ce que**
l'appareil récepteur (2) comprend un dispositif de sommation pour ajouter les $\underline{n}$ ou le moins grand nombre de signaux d'information retardés, ou pour ajouter les $n$ ou le moins grand nombre de signaux d'information retardés et le signal d'information.

9. Dispositif de communications comprenant en particulier un appareil récepteur (2) selon l'une des revendications précédentes, comportant un générateur de signaux (22) destiné à générer au moins $m$ signaux générés localement ($S_{L1},...,S_{Lm}$), qui sont retardés par un certain temps de retard les uns par rapport aux autres, et un corrélateur pour obtenir $m$ signaux corrélés ($S_{C1};...,S_{Cm}$) en corrélant un signal d'identification reçu, avec les $m$ signaux générés localement ($S_{L1},...,S_{Lm}$),
**caractérisé en ce que**
le récepteur comprend un dispositif de classement (23) pour identifier j signaux corrélés ($S_{R1}, .... S_{Rj}$) de puissance la plus élevée parmi les $m$ signaux corrélés ($S_{C1};...,S_{Cm}$), et un dispositif d'évaluation (25) pour sélectionner $n$ signaux corrélés des $j$ signaux corrélés (($S_{R1}, ...., S_{Rj}$) de puissance la plus élevée, $n$ étant inférieur ou égal à $j$.

10. Dispositif de communications selon la revendication 9,
**caractérisé en ce que**
le dispositif de communication est un dispositif de communication mobile (1).

11. Dispositif de communications selon la revendication 10,
**caractérisé en ce que**
le dispositif de communication est un téléphone mobile ou un ordinateur mobile.

12. Procédé pour faire fonctionner un appareil récepteur (2), en particulier un appareil récepteur (2) selon l'une des revendications 1 à 8, en recevant un signal d'identification et en obtenant $m$ signaux corrélés ($S_{C1};...,S_{Cm}$) par corrélation du signal d'identification avec $m$ signaux générés localement ($S_{L1}, .... S_{Lm}$) qui sont retardés en temps, les uns par rapport aux autres,
**caractérisé en ce que**
$j$ signaux corrélés ($S_{R1},.... S_{Rj}$) de puissance la plus élevée parmi les $m$ signaux corrélés ($S_{C1};...,S_{Cm}$) sont identifiés, et $n$ signaux corrélés des $j$ signaux corrélés ($S_{R1}, .... S_{Rj}$) de puissance la plus élevée, sont sélectionnés, $n$ étant inférieur ou égal à j.

13. Procédé selon la revendication 12,
**caractérisé en ce qu'**

- on reçoit un signal d'information,
- on obtient $n$ ou un moins grand nombre de signaux d'information retardés en retardant le signal d'information par des retards de temps qui correspondent aux $n$ signaux corrélés sélectionnés, et

- on ajoute les $n$ ou le moins grand nombre de signaux d'information retardés, ou l'on ajoute les $n$ ou le moins grand nombre d'information retardés et le signal d'information.

## Fig. 1

## Fig. 2

# Fig. 3

$S_{ID}$

$S_{C1}, ..., S_{Cm}$  $S_{CF1}, ..., S_{CFm}$  $S_{R1}, ..., S_{Rj}$  $S_{RF1}, ..., S_{RFj}$

| 21 | 23 | 24 | 25 |

$\tau_1, ..., \tau_n$

20

$S_{L1}, ..., S_{Lm}$

| 22 |

$C_{\tau 1}, ..., C_{\tau m}$

10

EP 1 154 585 B1

# Fig. 4

$S_{ID}$

$S_{C1}$

$S_{C2}$

$S_{Cm}$

201

202

203

20

$S_{L1}$   $S_{L2}$   $S_{Lm}$

# Fig. 5

$S_{CF1}, ..., S_{CFm}$

$P_1, ..., P_m$

26

27

$S_{R1}, ..., S_{Rj}$

23

30

31 — read
$P_1, \ldots, P_m$
$S_{CF1}, \ldots, S_{CFm}$

32 —
$P(1), \ldots, P(m) = P_1, \ldots, P_m$
$S(1), \ldots, S(m) = S_{CF1}, \ldots, S_{CFm}$

**Fig. 6**

33 — $L = INT\left(\dfrac{m}{2}\right) + 1,$
$R = m$

34 — $L > 1$ ?

N

Y

35 — $L = L - 1$

38 — $P0 = P(R), S0 = S(R)$
$P(R) = P(1), S(R) = S(1)$

36 — $P0 = P(L)$
$S0 = S(L)$

39 — $R = 1$ ?

N

Y

37 — $I = L$
$J = L + L$

40 — $P(1) = P0$
$S(1) = S0$

41 — $S_{R1}, \ldots, S_{Rj} = S(1), \ldots, S(j)$

43 — $J > R$ ?

N

Y

44

42

# Fig. 7

# Fig. 8

$$\tau_1, \ldots, \tau_n$$

$S_{info}$ → [ 50 ] → [ 51 ] → $S_{de}$

$S_{info1}, \ldots, S_{infon}$

11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9610873 A

**Non-patent literature cited in the description**

- **PRICE, R. et al.** A Communication Technique for Multipath Channels. *Proceedings of the IRE,* 1958, vol. 46, 555-570
- **GWEON-DO JO ; SOOK-HEYN CHANG ; HYE-YEON KWEON ; SUN-YOUNG KIM.** Performance Evaluation of Pilot Channel Acquisition System in CDMA Forward Link. *IEEE 48th Vehicular Technology Conference,* 1998, vol. 2, 1244-1248
- **K. SAM SHANMUGAN ; A.M. BREIPOHL.** Random signals, the detection estimation and data analysis. John Wiley and Sons, 1988